# EUROPEAN PATENT SPECIFICATION

(11) **EP 1 403 948 B1**
(45) Date of publication and mention of the grant of the patent: **28.07.2010**
(21) Application number: 03016544.3
(22) Date of filing: 24.07.2003
(51) Int. Cl.: H01M 10/0565

(54) **Electrolyte compositions**
Elektrolytzusammensetzungen
Compositions d'électrolyte

(30) Priority: 30.07.2002 JP 2002221903
(43) Date of publication of application: 31.03.2004
(73) Proprietor: DAINICHISEIKA COLOR & CHEMICALS MFG. CO. LTD., Chuo-ku, Tokyo 103-8383 (JP)
(72) Inventor: Nakamura, Michiei, Dainichiseika Color & Chemicals Mfg. Co., Ltd., Nihonbashi, Chuo-ku, Tokyo 103-8383 (JP); Yoshikawa, Sachio, Dainichiseika Color & Chemicals Mfg. Co., Ltd., Nihonbashi, Chuo-ku, Tokyo 103-8383 (JP); Takizawa, Minoru, Dainichiseika Color & Chemicals Mfg. Co., Ltd., Nihonbashi, Chuo-ku, Tokyo 103-8383 (JP); Fujita, Toshiyasu, Dainichiseika Color & Chemicals Mfg. Co., Ltd., Nihonbashi, Chuo-ku, Tokyo 103-8383 (JP); Doi, Seiji, Dainichiseika Color & Chemicals Mfg. Co., Ltd., Nihonbashi, Chuo-ku, Tokyo 103-8383 (JP); Kihara, Nobuhiro, Osaka 599-8233 (JP)
(74) Representative: Hartz, Nikolai

(56) References cited:
- EP-A- 1 215 244
- JP-A- 6 223 842
- JP-A- 11 140 182

## Description

### BACKGROUND OF THE INVENTION

### a) Field of the Invention

This invention relates electrolyte compositions for batteries or electric double layer capacitors which may hereinafter be called simply "capacitors", films comprising the compositions, batteries or capacitors making use of such films, production processes of (co)polymers or oligomers useful as ion-conducting media in the compositions, and the (co) polymers or oligomers produced by the processes.

### b) Description of the Related Art

Keeping in step with developments of information technology (IT) in recent years, striking achievements have been made in the size and weight reductions of electronic equipment, leading especially to spreading of notebook personal computers and personal digital assistants (portable information terminal equipment) and also to an enlarged demand for portable equipment such as watches, portable radios, portable cassette players, portable compact disk players, video cameras, mobile phones and digital cameras.

To meet the move toward smaller and higher-performance models of these electronic equipments, lithium ion secondary batteries employed as power sources are also required to be reduced in thickness, weight and size and also to be improved in performance. These lithium ion secondary batteries are characterized in that they are suited for size and weight reductions of portable electronic equipment and also for long-hour use, because they have high energy density per unit volume, are high in voltage, and are lighter in weight than other batteries. As these batteries are highest in both energy density and output density and can be fabricated smaller, attempts have been made to mount them as drive batteries together with a nickel metal hydride battery on hybrid vehicles or electric cars.

Conventional lithium ion secondary batteries use, as ion-conducting media, organic solvents such as ethylene carbonate and propylene carbonate. To achieve reductions in weight and thickness and improvements in safety, however, polymer lithium secondary batteries have been developed. These polymer lithium secondary batteries make use of polymer electrolytes, which in turn use polyethylene oxide, polyacrylonitrile or polyfluorinated olefins as ion-conducting media.

Batteries making use of these polymer ion-conducting media are very effective from the standpoint of achieving reductions in weight and thickness and improvements in safety. Compared with batteries making use of organic solvents as ion conducting media, however, their specific ion conductivities which are associated with transfer of lithium ions and are considered to be the most important performance as batteries are not sufficient so that further improvements are desired.

Further, polymer solid electrolytes are proposed in JP-A-6-223842, each of which contains an organic polymer having carbonato groups as an ion-conducting medium and a metal salt as an electrolyte component. As the monomer of the polymer ion-conducting medium, vinyl ethylene carbonate, ethylene carbonate methacrylate, ethylene carbonate polyethylene glycol methacrylate and the like are exemplified. As the ion conductivities of polymer solid electrolytes containing vinyl ethylene carbonate homopolymer, 2.3 x 10⁻⁴ to 9.8 x 10⁻⁴ S/cm were measured at 25°C, and therefore, preferred results were obtained.

As a process for the synthesis of ethylene carbonate methacrylate or ethylene carbonate polyethylene glycol methacrylate, however, epoxy methacrylate or epoxy polyethylene glycol methacrylate is hydrolyzed with sodium hydrogencarbonate into ethylene diol methacrylate or ethylene diol polyethylene glycol methacrylate. To the resulting hydrolysate, 3 equivalents of triphosgene (CCl₃O-CO-OCCl₃) are reacted in dichloromethane to form cyclocarbonato groups.

However, the diol and triphosgene are both bifunctional. As a side reaction in the above-described reaction, linear (namely, acyclic) carbonate bonds may be formed or a bimolecular reaction or polycondensation reaction may take place between the monomers themselves. On the other hand, the polymer has a high possibility of undergoing an intermolecular crosslinking reaction. Further, triphosgene employed in the above-described reaction has noxiousness and corrosiveness, so that upon its industrial application, a study on safety, improvements in working environment and disposal of waste must be consummated. For the industrial application of a polymer solid electrolyte in a large quantity, its synthesis process is, therefore, required to be easy, to involve substantially no or only slight side reaction, to assure good yield, and to permit economical production at low cost.

### SUMMARY OF THE INVENTION

Therefore, an object of the present invention is to provide an electrolyte composition containing an ion-conducting polymer medium according to claim 8 which can be industrially produced with ease and in safe according to claim 1 and have ion conductivity close to those of organic-solvent-based electrolytes. Another object of the present invention is to provide a film composed of the composition. A further object of the present invention is to provide a battery or capacitor making use of the electrolyte composition or the membrane. A still further object of the present invention is to provide a production process of a (co) polymer useful as the ion-conducting medium in the above-described composition. A yet further object of the present invention is to provide the (co)polymer produced by the process.

The above-described objects can be achieved by the present invention to be described hereinafter. Described specifically, the present invention provides, in one aspect thereof, an electrolyte composition for batteries or electric double layer capacitors. The electrolyte composition comprises (A) a polymer component and eventually (B) an oligomer component, and (C) an electrolyte component. The polymer component (A) is (A-1) a (co) polymer containing at least one cyclocarbonato group represented by the below-described formula (1), obtained by reacting carbon dioxide with a (co)polymer, which contains at least one epoxy group, and/or (A-2) a (co)polymer, which is not according to the invention, obtained by (co)polymerizing a monomer containing at least one cyclocarbonato group represented by the below-described formula (1), which has been obtained by reacting carbon dioxide with a monomer containing at least one epoxy group. The oligomer component (B) is an oligomer containing two or more cyclocarbonato groups represented by the below-described formula (1), obtained by reacting carbon dioxide with an oligomer, which contains two or more epoxy groups in a molecule. 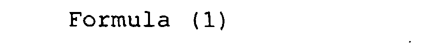 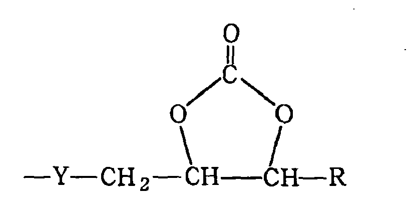 wherein Y represents a connecting group to the backbone of the corresponding (co)polymer (A-1) or (A-2), and R represents a hydrogen atom or an alkyl group having 1 to 3 carbon atoms.

According to the present invention, the (co)polymer and oligomer permit easy and quantitative introduction of one or more cyclocarbonato groups therein by using harmless and economical carbon dioxide. The (co)polymer and oligomer have ion conductivity close to those of organic-solvent-based ion-conducting media, and can economically provide electrolyte compositions containing such materials, films composed of the compositions, and batteries or capacitors making use of such electrolyte compositions or films.

### DETAILED DESCRIPTION OF THE INVENTION AND PREFERRED EMBODIMENTS

The present invention will next be described in further detail based on preferred embodiments. The electrolyte composition according to the present invention for batteries or capacitors contains, as essential components, (A) a polymer component and eventually (B) an oligomer component, and (C) an electrolyte component.

In the present invention, the (co)polymer (A-1) and/or the (co)polymer (A-2) is used as the polymer component (A) . A preferred example of the (co)polymer (A-1) is a (co)polymer, which is obtained by reacting carbon dioxide with a (co) polymer containing at least one recurring units represented by the below-described formula (2) such that the epoxy group is converted into a cyclocarbonato group. On the other hand, a preferred example of the (co)polymer (A-2) is a (co)polymer of a monomer obtained by reacting carbon dioxide with a monomer represented by the below-described formula (3) such that the epoxy group is converted into a cyclocarbonato group. In the present invention, the (co)polymer (A-1) and the (co)polymer (A-2) are not limited to preferred (co)polymers represented by the below-described formula (2) or (3), but other (co)polymers having reactive groups such as hydroxyl groups or carboxyl groups on side chains, for example, copolymers of monomers such as allyl alcohol and hydroxyalkyl (meth) acrylates. Further, the polymer component (A) can be a non-crosslinked (co)polymer and/or a crosslinked (co)polymer. 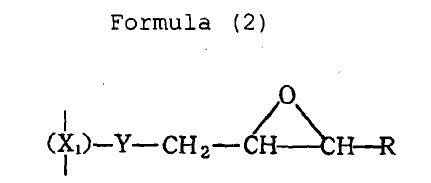 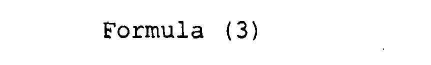 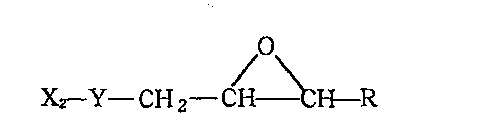 wherein X₁ represents a polymerization residual group of an α,β-unsaturated carboxylic acid, X₂ represents a reaction residual group of an α,β-unsaturated carboxylic acid, Y represents a connecting group, and R represents a hydrogen atom or an alkyl group having 1 to 3 carbon atoms.

Incidentally, the term " (co) polymer" as used herein means both of a homopolymer of a monomer represented by the formula (3) and a copolymer between the monomer represented by the formula (3) and another monomer copolymerizable with the first-mentioned monomer. The α,β-unsaturated carboxylic acid can be at least one α,β-unsaturated carboxylic acid selected from the group consisting of acrylic acid, methacrylic acid, crotonic acid, maleic acid, fumaric acid and itaconic acid. In each of the formulas (2) and (3), Y which represents a connecting group can preferably be a -CO·O- or -O- group. As a preferred specific examples, the (co)polymer containing at least one epoxy group can be, for example, a homopolymer of glycidyl methacrylate or a copolymer between glycidyl methacrylate and another monomer.

The present invention is primarily characterized in that the at least one cyclocarbonato group in the polymer component (A), namely, the (co)polymer (A-1) and/or the (co)polymer (A-2) or the two or more cyclocarbonato groups in the oligomer component (B), which will be described subsequently herein, are formed by causing carbon dioxide to act on epoxy group(s). Upon formation of the cyclocarbonato group(s), this process facilitates the reaction between the epoxy group(s) and carbon dioxide, forms the cyclocarbonato group (s) at a high yield with substantially no or slight side reaction, and moreover, does not require use of any harmful substance unlike the conventional art. The present invention is, therefore, very advantageous industrially.

The reaction to convert at least one epoxy group in the (co) polymer containing at least one recurring unit of the formula (2) or in the monomer of the formula (3) or two or more epoxy groups in the oligomer into cyclocarbonato group (s) with carbon dioxide can be carried out by blowing carbon dioxide into the epoxy-containing (co) polymer or monomer or the oligomer or into a solution and the like thereof in an organic solvent in the presence of a catalyst, under environmental pressure or elevated pressure at a reaction temperature of from about 50°C to 120°C.

Usable examples of the catalyst can include alkali metal halides such as lithium bromide, lithium chloride and lithium iodide; quaternary ammonium salts such as tetramethylammonium chloride and tetramethylammonium bromide; phosphine compounds such as triphenylphosphine; and amines such as 1,8-diazabicyclo[5.4.0]-7-undecene, 1,4-diazabicyclo[2.2.2]-octane and 4-dimethylaminopyridine. These catalysts can be used preferably in a range of from 0.1 to 50 mol %, with a range of from 0.5 to 20 mol % being more preferred, both based on the epoxy group(s).

When converting the epoxy group(s) of the epoxy-containing (co)polymer into cyclocarbonato group(s), the (co)polymer is reacted in the form of a solution in a solvent, in the form of a polymer gel caused to swell with a solvent or in the form of solid powder with carbon dioxide such that the (co) polymer having the cyclocarbonato group(s) can be obtained. In the case of the epoxy-containing monomer or epoxy-containing oligomer, the conversion of its epoxy group (s) into cyclocarbonato groups can also be conducted by using it in the form of a solution or suspension in a solvent or under solventless conditions.

The above-described conversion of the epoxy group (s) into the cyclocarbonato group(s) can be simply and conveniently conducted while monitoring the progress of the reaction by infrared absorption spectroscopy. Described specifically, the reaction can be monitored based on the phenomenon that, as the reaction proceeds, an infrared absorption at 910 cm⁻¹ characteristic to an epoxy group gradually decreases while an infrared absorption at 1,800 cm⁻¹ characteristic to a cyclocarbonato group begins to appear strongly. In addition, it is also useful to monitor the reaction on the basis of an increase in the weight of a reaction product as a result of absorption of carbon dioxide, to monitor the reaction by titrimetric quantitation of the content of epoxy group(s), or to monitor the reaction on the basis of a decrease in the absorption corresponding to a chemical shift of 3 to 4 ppm ascribable to an epoxy group and increases in the absorptions corresponding to chemical shifts of about 4.5 ppm and of 5.2 ppm ascribable to a cyclocarbonato group by using ¹H-NMR.

When carbon dioxide is reacted, for example, with polyglycidyl methacrylate in the form of a solution in dimethylformamide (DMF) at 120°C for 24 hours under environmental pressure by using as a catalyst triphenylphosphine-sodium iodide in an amount of 1.5 mol % based on the epoxy groups in the polyglycidyl methacrylate, the conversion of the epoxy groups into cyclocarbonato groups is conducted to substantially 99% to 100%, in other words, is quantitatively conducted if the reaction is conducted while monitored the same by ¹H-NMR and titrimetry as described above. In the present invention, the reaction is conducted quantitatively (namely, at high yield) and the employed reactant is carbon dioxide, as described above. Upon formation of cyclocarbonato group(s), the present invention is free of hazards such as toxicity to the human body and corrosiveness to a reactor. The conversion into cyclocarbonato group (s) can be achieved at good yield without needing any special equipment.

When a bifunctional compound such as triphosgene or phosgene is reacted to a diol-containing polymer by the prior art, crosslinking by carbonate bonds between polymer molecules takes place along with the formation of cyclocarbonato group (s) as mentioned above. It was, therefore, next to impossible to efficiently convert diol group (s) into cyclocarbonato group (s). Further, when triphosgene or phosgene is reacted with a feed monomer containing a diol group, there is a high possibility that in addition to formation of a monomer containing a cyclocarbonato group, a reaction may also take place with the hydroxyl groups of the feed monomer to form linear carbonate bonds, resulting in formation of a dimer of the feed monomers and also formation of a polycarbonate as a polymer. In this case, an additional step is, therefore, needed to separate the monomer containing the cyclocarbonato group so that the yield of the target substance is low. However, these problems have been satisfactorily resolved in the present invention.

As the polymer component (A) in the present invention, a homopolymer of a monomer containing at least one cyclocarbonato group, said homopolymer containing cyclocarbonato groups at a high content, is preferred to avoid a reduction in the electrical conductivity of the electrolyte composition according to the present invention. As will be described subsequently herein, however, the polymer component (A) can also be a copolymer between a monomer unit containing an epoxy group, which will be converted into a cyclocarbonato group later, or a cyclocarbonato group and another monomer (comonomer) unit to improve physical properties a film or gel composed of the electrolyte composition according to the present invention, such as the flexibility, strength and softening point of the film or the strength and softening point of the gel; to improve the solubility in organic solvents; and to improve the bonding property, compatibility and the like of a shape-retaining material, which is used upon forming the electrolyte composition into a film and will be described subsequently herein, with an electrode, separator or the like.

Preferred examples of the comonomer can include C₁₋₂₃-alkyl (meth)acrylates, hydroxy(C₂₋₄-alkyl) (meth)acrylates, C₁₋₄-alkoxy(C₂₋₄-alkyl) (meth) acrylates, polyethylene glycol (meth)acrylate, C₁₋₄-alkoxypolyethylenoxy (meth)acrylates, (meth)acrylonitrile, and (meth)acrylic acid. In the case of polyethylene glycol (meth)acrylate, C₁₋₄-alkoxypolyethyleneoxy (meth) acrylates and the like, the polyethylene glycol segments of the monomers retain not only plasticity but also electroconductivity even after copolymerization and, when copolymerized, can impart plasticity and solubility in organic solvents to the resulting copolymers without substantially impairing the conductivity of the resulting copolymers. Incidentally, the term "(meth)acrylate" as used herein means both "acrylate" and "methacrylate".

These comonomers can each be used in various ways. In the case of the copolymer (A-1), the comonomer is used as a comonomer for an epoxy-containing monomer, and in the copolymer so obtained, the epoxy group (s) is converted into cyclocarbonato group(s) as described above. In this case, monomer units containing cyclocarbonato group(s) can preferably account for about 20 mol % or greater of the whole monomer units in the copolymer. In the case of the copolymer (A-2), on the other hand, the monomer containing cyclocarbonato group(s) and the comonomer are copolymerized into a copolymer containing cyclocarbonato group(s). When a copolymer is formed using a comonomer as described above, monomer units containing cyclocarbonato group (s) can preferably account for about 20 mol % or greater of the whole monomer units in the copolymer. The weight average molecular weight of such a polymer component (A) as described above may preferably be in a range of from about 10,000 to 5,000,000.

When there is a need to form the electrolyte composition of the present invention into the form of a gel, the molecular weight of the polymer component (A) can be made very high such that the composition does not exhibit flowability even when it absorbs a solvent. As an illustrative method for forming the polymer component (A) into the form of a gel, it is effective to form the (co)polymer in a crosslinked structure.

Examples of a method for forming the polymer component (A) in a crosslinked structure can include chemical crosslinking methods and physical crosslinking methods. They can be used either singly or in combination. As a chemical crosslinking method, the epoxy-containing monomer or a monomer containing cyclocarbonato group(s) can be copolymerized with comonomer containing two or more polymerizable groups, or reactive groups can be introduced into the polymer component (A), followed by crosslinking of the polymer component (A) with a crosslinking agent by making use of the reactive groups (post-crosslinking) . As a physical crosslinking method, on the other hand, crystalline polymer segments or solvent-incompatible segments are introduced as crystalline phases or agglutinated phases into the molecule of the polymer component (A), and these crystalline phases or agglutinated phases are then used as crosslinking points in the (co)polymer. Upon processing the electrolyte composition of the present invention into a film by applying the electrolyte composition to a shape-retaining material, electrode material or the like, that is sticking, impregnating or coating a shape-retaining material, electrode material or the like with the electrolyte composition as will be described subsequently herein, the post-crosslinking method is preferred in view of readiness in processing.

As the comonomer which is useful upon crosslinking the polymer component (A) and contains two or more polymerizable groups, a conventionally known comonomer can be used. Illustrative are divinylbenzene, divinylbiphenyl, ethylene glycol di(meth)acrylate, (poly)ethylene glycol di(meth)acrylate, propylene glycol di(meth)acrylate, (poly)propylene glycol di(meth)acrylate, N,N'-methylenebisacrylamide, 1,3-butanediol di(meth)acrylate, 1,4-butanediol di(meth)acrylate, tripropylene glycol di(meth)acrylate, neopentyl glycol di(meth)acrylate, trimethylol propane tri(meth)acrylate, pentaerythritol tri(meth)acrylate, pentaerythritol tetra(meth)acrylate, and dipentaerythritol hexa(meth)acrylate.

According to the post-crosslinking method, reactive groups such as hydroxyl groups, amino groups or carboxyl groups are introduced into the polymer component (A) either upon or after production of the polymer component (A), followed by crosslinking with a suitable crosslinking agent. These reactive groups can be introduced by copolymerizing, for example, a hydroxy(C₂₋₄-alkyl) (meth)acrylate, di- or poly(polymerization degree: approximately 25) ethylene glycol (meth) acrylate, allyl alcohol, (meth) acrylic acid, maleic acid, maleic anhydride, fumaric acid or the like as a comonomer upon production of the polymer component (A). In the polycyclocarbonation for the production of the polymer component (A), epoxy groups allowed to remain or caused to remain in the (co)polymer can also be used as the above-described reactive groups.

The crosslinking agent for use in the post-crosslinking method can be a known polyfunctional compound containing, for example, isocyanate groups or epoxy groups. Examples of such a known polyfunctional compound can include polyisocyanate compounds such as dimethyl hexamethylene diisocyanate, lysine triisocyanate, trimethylolpropane-hexamethylene diisocyanate adduct, and trimethylolpropane-tolylene diisocyanate adduct; polyepoxy compounds such as polyethylene glycol diglycidyl ether; and polycarbodiimide compounds such as a polycarbodiimide available from hexamethylene diisocyanate and a polycarbodiimide available from tolylene diisocyanate. The above-described crosslinking reaction can be conducted by applying heat treatment or the like after the electrolyte composition according to the present invention is formed into a desired state, for example, a liquid, a solid film, or a film on a shape-retaining material, after the electrolyte composition according to the present invention is processed into a component such as a battery, or after the electrolyte composition according to the present invention is filled in a battery or the like.

As a physical crosslinking method of the polymer component (A), the crosslinking can be conducted by introducing polymer segments of good crystallizability (hard segments) or solvent-incompatible segments into the polymer component (A) by block copolymerization or graft copolymerization. Examples of the hard segments can include polystyrene segments, polyethylene segments and polypropylene segments, and examples of the solvent-incompatible segments can include, in addition to the above-exemplified segments, polybutadiene segments, polyisoprene segments and polyethylene-polypropylene block segments.

These hard segments or solvent-incompatible segments are not compatible with polymer segments containing cyclocarbonato groups, and play a role in achieving crosslinking by crystallization or agglutination, that is, so-called microdomain structures. When the electrolyte composition according to the present invention is formed into a film by itself or is caused to gel, the crosslinked structure so formed serves to show functions such as excellent strength and high stability of the film or gel, improvements in the bonding property to an electrode, a shape-retaining material or the like, improvements in the solubility in a general-purpose solvent upon formation of a film or upon coating or impregnating a shape-retaining material or the like with the electrolyte composition, and improvements in the compatibility with a high-molecular sticking agent which may be added as needed.

The oligomer component (B) employed in the present invention, on the other hand, is an oligomer containing two or more cyclocarbonato groups, obtained by reacting carbon dioxide with an oligomer, which contains two or more epoxy groups in a molecule. Use of a polyepoxy oligomer compound having a 1, 4-phenylene skeleton can provide, as such an oligomer, a solid oligomer containing cyclocarbonato groups. Reaction conditions under which carbon dioxide is reacted to such a polyepoxy compound are similar to those employed for the process in which carbon dioxide is reacted with the above-described epoxy-containing monomer or (co) polymer to obtain a monomer or polymer containing cyclocarbonato group(s). Oligomers, each of which is obtained as described above and contains two or more cyclocarbonato groups therein, can be used either singly or in combination. It is also preferred to use the oligomer by adding the same to the polymer component (A) which contains cyclocarbonato group(s).

The oligomer component (B) having cyclocarbonato groups is, for example, an oligomer containing in a molecule thereof two or more cyclocarbonato groups represented by the following formula (4): 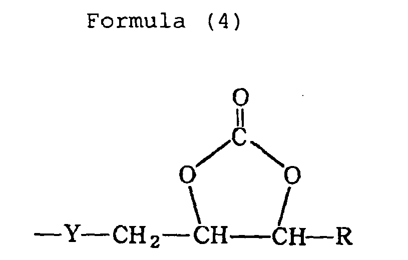 wherein Y represents a connecting group to the backbone the oligomer, and R represents a hydrogen atom or an alkyl group having 1 to 3 carbon atoms.

The cyclocarbonato group of the formula (4) is contained as a side chain of the oligomer or at an end of the oligomer. For example, epichlorohydrin (carbon number: 3) or an alkyl derivative thereof is reacted to hydroxyl groups or carboxyl groups contained in the oligomer such that epoxy groups are introduced. The epoxy groups are then converted into cyclocarbonato groups in a similar manner as described above.

More specific examples of the oligomer component (B) can include cyclocarbonato C₃₋₆-alkyl ethers of polyhydric alcohols (number of OH groups: 2 to 10), for example, neopentyl glycol di(cyclocarbonatopropyl ether), dibromoneopentyl glycol di(cyclocarbonatopropyl ether), hexanediol di(cyclocarbonatopropyl ether), glycerin tri(cyclocarbonatopropyl ether), diglycerin tetra(cyclocarbonatopropyl ether), polyglycerin poly(cyclocarbonatopropyl ether), trimethylolpropane tri(cyclocarbonatopropyl ether), pentaerythritol tetra(cyclocarbonatopropyl ether), and sorbitol tetra(cyclocarbonatopropyl ether); and cyclocarbonato C₃₋₆-alkyl ethers of poly C₂₋₄-alkylene glycols (polymerization degree: 2 to 22), for example, polyethylene glycol di(cyclocarbonatopropyl ethers)(polymerization degree: 2 to 22) and polypropylene glycol di(cyclocarbonatopropyl ethers)(polymerization degree: 2 to 11).

The above-described oligomer components (B) can be represented, for example, by the following formula (5): 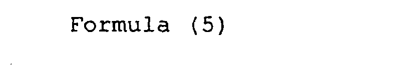 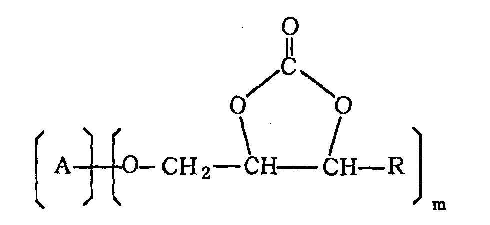 wherein A represents a residual group of a polyhydric alcohol or glycol, m stands for a numerical value not smaller than 2 but not greater than a number of hydroxyl groups in said polyhydric alcohol or glycol, and R represents a hydrogen atom or an alkyl group having 1 to 3 carbon atoms.

Further, as illustrative ester compounds, cyclocarbonato C₃₋₆-alkyl esters of polycarboxylic acids (number of COOH groups: 2 to 4) can be mentioned including, for example, di(cyclocarbonatopropyl) phthalate, di(cyclocarbonatopropyl) terephthalate, tri(cyclocarbonatopropyl) trimellitate, di(cyclocarbonatopropyl) adipate, and di(cyclocarbonatopropyl) sebacate.

The above-described oligomer components (B) can be represented, for example, by the following formula (6): 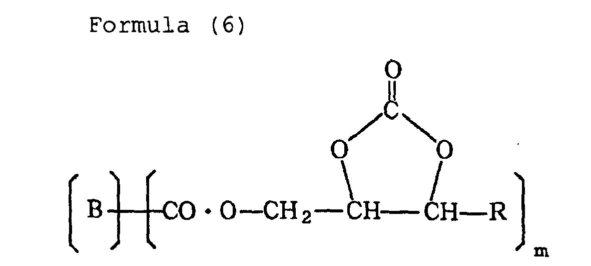 wherein B represents a residual group of a polycarboxylic acid, m stands for a numerical value not smaller than 2 but not greater than a number of carboxyl groups in said polycarboxylic acid, and R represents a hydrogen atom or an alkyl group having 1 to 3 carbon atoms.

As illustrative aromatic-ring-containing compounds, cyclocarbonato C₃₋₆-alkyl ethers of polyphenols (number of OH groups: 2-10) can be mentioned including, for example, hydroquinone di(cyclocarbonatopropyl ether), resorcinol di(cyclocarbonatopropyl ether), bisphenol A-bis(cyclocarbonatopropyl ether), and bisphenol F-bis(cyclocarbonatopropyl ether).

The above-described oligomer components (B) can be represented, for example, by the following formula (7): 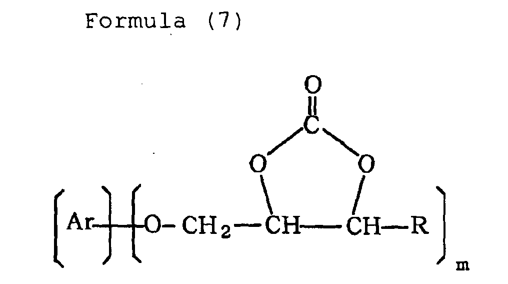 wherein Ar represents a residual group of an aromatic compound having two or more hydroxyl groups, m stands for a numerical value not smaller than 2 but not greater than a number of hydroxyl groups in said aromatic compound, and R represents a hydrogen atom or an alkyl group having 1 to 3 carbon atoms.

In addition, a formaldehyde condensation product of phenol

(cyclocarbonatopropyl ether), a formaldehyde condensation product of cresol (cyclocarbonatopropyl ether), and the like can also be mentioned. The term "oligomer" as used herein means an organic compound the weight average molecular weight is about 300 to 10,000.

The electrolyte component (C) for use in the present invention can be at least one compound selected from the group consisting of compounds which form lithium ions, sodium ions, potassium ions, ammonium ions or tetraalkylammonium ions. Specifically, the electrolyte component (C) can be at least one compound selected from the group consisting of lithium bromide, lithium iodide, lithium thiocyanate, lithium perchlorate, lithium tetrafluoroborate, lithium hexafluorophosphate, lithium trifluoromethanesulfonate, lithium bis(trifluoromethanesulfonyl)amide, tetraethylammonium perchlorate, tetraethylammonium tetrafluoroborate, and tetraethylammonium hexafluorophosphate.

The electrolyte composition according to the present invention comprises, as essential components, the above-described polymer component (A) and/or oligomer component (B) and the electrolyte component (C), and can be obtained by mixing the essential components into a homogeneous mixture. The electrolyte component (C) may be used preferably in a proportion of from about 0.02 to 1.0 mol per every cyclocarbonato group in the polymer component (A) and/or oligomer component (B). An excessively small proportion of the electrolyte component (C) may lead to an electrolyte composition the ion conductivity of which is unduly low, while an excessively large proportion of the electrolyte component (C) may give adverse effects on properties of a film to be described subsequently herein, such as a reduction in the strength of the film. Such excessively small and large proportions of the electrolyte component (C), therefore, are not preferred in many instances.

In the case of electrolyte compositions composed of the polymer component (A) and lithium perchlorate added in proportions of from 0 . 5 to 0.8 mol per every cyclocarbonato group in the polymer component (A), for example, ion conductivities of from 10⁻⁴ to 10⁻⁵ S/cm were shown. In the case of electrolyte compositions composed of the oligomer component (B) and lithium perchlorate added in proportions of from 0.5 to 0.8 mol per every cyclocarbonato group in the oligomer component (B), on the other hand, ion conductivities of from 10⁻² to 10⁻³ S/cm were shown. When the polymer component (A) and/or oligomer component (B) contains ether group (s) such as polyethylene glycol segment (s) in the structure(s) thereof, the ether group(s) also have ion conductivity. It is, therefore, preferred to determine the proportion of the electrolyte component (C) by taking the number of the ether group(s)into additional consideration.

The electrolyte composition according to the present invention may further contain at least one organic solvent selected from the group consisting of ethylene carbonate, propylene carbonate, dimethyl carbonate, diethyl carbonate, methyl ethyl carbonate, vinylene carbonate, γ-butyrolactone and diphenyl carbonate. These organic solvent can increase the ion conductivity of the electrolyte composition according to the present invention. When such a solvent is added to the electrolyte composition according to the present invention, it is preferred to use the solvent in an amount 0.1 to 100 times by weight as much as the total amount of the polymer component (A) and/or oligomer component (B) and the electrolyte component (C).

It is also possible to cause carbon dioxide to act on a high molecular weight solvent containing one epoxy group in a molecule as an illustrative organic solvent in a similar manner as described above and to use the resulting high molecular weight solvent containing one cyclocarbonato group in a molecule as a solvent. Such a high molecular weight solvent with cyclocarbonato group(s) contained therein has a high boiling point and high flashpoint, so that its addition to the electrolyte composition according to the present invention provides the electrolyte composition with improved safety. The term "high molecular weight solvent" as used herein means a substance, which has a molecular weight of from about 100 to 1,000 and is in a liquid form.

Examples of the high molecular weight solvent containing one cyclocarbonato group in a molecule can include 2-ethylhexyl (cyclocarbonatopropyl ether), phenyl (cyclocarbonatopropyl ether), and 2,4-dibromophenyl (cyclocarbonatopropyl ether). Among these, the brominated, high molecular weight solvent can impart flame retardancy to the electrolyte composition according to the present invention. The above-exemplified, high molecular weight solvents containing one cyclocarbonato group in a molecule can be represented, for example, by the following formula (8): 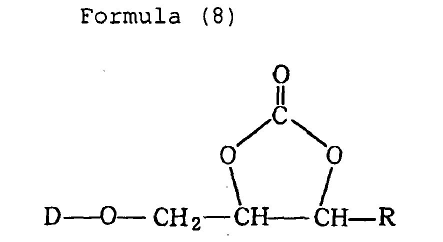 wherein D represents a residual group of a hydroxyl-containing compound, and R represents a hydrogen atom or an alkyl group having 1 to 3 carbon atoms.

Such a high molecular weight solvent containing one cyclocarbonato group in a molecule can be used preferably in an amount 0.1 to 100 times by weight as much as the total amount of the polymer component (A) and/or oligomer component (B) and the oligomer component (C).

In the present invention, one or more solvent-soluble polymers known to date and used in applications such as adhesives, paint vehicles and ink varnishes, such as poly(meth)acrylic, polyvinyl, polyolefinic and/or polyester-type solvent-soluble polymers, may also be added to the electrolyte composition according to the present invention to improve physical properties of films composed of the electrolyte composition and their properties such as bonding property and compatibility with electrodes, shape-retaining materials or separators.

Upon placing in batteries or capacitors, the electrolyte composition according to the present invention can be used by preparing it into various solid forms, for example, solid films, impregnated films, coated films or sheets, all of which will hereinafter be collectively called "solid films". Specifically, the following forms can be mentioned. Irrespective of the form, the preferred film thickness ranges from about 1 to 2, 000 µm or so.
1) A solid film obtained by forming into a film an electrolyte composition composed of the polymer component (A) and the electrolyte component (C).
2) A solid film obtained by forming into a film an electrolyte composition which contains the polymer component (A), the solid oligomer component (B) and the electrolyte component (C).
3) A solid film obtained by forming into a film an electrolyte composition which contains the solid oligomer component (B) and the electrolyte component (C).

The electrolyte composition according to the present invention can also be used in the form of gel films, viscous liquid films and liquid films, which will hereinafter be collectively called "wet films". Specifically, the following forms can be mentioned. Irrespective of the form, the preferred film thickness ranges from about 1 to 2,000 µm or so.
4) A wet film obtained by forming into a film an electrolyte composition composed of the polymer component (A), a liquid oligomer component (B) and the electrolyte component (C).
5) A wet filmobtainedby forming into a film an electrolyte composition which contains the liquid oligomer component (B) and the electrolyte component (C).
6) A liquid film obtained by forming into a film an electrolyte composition which contains the polymer component (A), an organic solvent and the electrolyte composition (C).
7) A liquid film obtained by forming into a film an electrolyte composition which contains the polymer component (A), the oligomer component (B), the organic solvent and the electrolyte component (C).
8) A liquid film obtained by forming into a film an electrolyte composition which contains the oligomer component (B), the organic solvent and the electrolyte component (C).

A variety of processes can be mentioned for the formation of the above-described wet films. For example, a volatile organic solvent is added to a solid or liquid electrolyte composition, and the resulting mixture is formed into a wet film. A solid electrolyte film is immersed in a liquid oligomer component (B) and/or an organic solvent. A solid film is placed in a battery or the like, followed by injection of a liquid oligomer component (B) and/or an organic solvent. A solid film similar to the above-mentioned solid film except for the exclusion of the electrolyte component (C) is immersed in the liquid oligomer component (B) and/or organic solvent in which the electrolyte component (C) is contained. A solid film similar to the above-mentioned solid film except for the exclusion of the electrolyte component (C) is placed in a battery or the like, followed by injection of the liquid oligomer component (B) and/or the organic solvent.

To make the above-described solid film or wet film as thin as possible while retaining its shape, the present invention also makes it possible to bond or otherwise apply to the film a shape-retaining material, such as a woven fabric, a nonwoven fabric or a woven and/or nonwoven bonded fabric, a porous polyolefin film commonly employed as a separator in a battery, or a like material or membrane; or as an alternative, the present invention further makes it possible to prepare the electrolyte composition according to the present invention into a liquid form and then to impregnate or coat the above-mentioned shape-retaining material with the liquid electrolyte composition to form a solid or wet film. As an impregnating or coating method, a conventionally-known coating machine, for example, an air doctor coater, a blade coater, a rod coater, a knife coater, a squeeze coater, an impregnating coater, a reverse roll coater, a gravure coater, a casting coater, a spray coater or the like can be selectively used depending on the properties of the electrolyte composition and the shape-retaining material.

As a method for forming a heat-fusible electrolyte composition according to the present invention into a film, the film can be formed by itself or on a shape-retaining material by using a known plastic processing machine such as an extrusion coater, a heated twin-roll machine, a heated three-roll machine, a press forming machine or a blown-film extruder. As a method for bonding a film to a shape-retaining material, the film can be bonded by pressing it onto the shape-retaining material through a heated roll machine or on a heated press.

Illustrative of the material of the shape-retaining material, such as a woven fabric, a nonwoven fabric or a woven and/or nonwoven bonded fabric, for use in the above-described film-forming method are polyethylene, polypropylene, polyamides, polyacrylonitrile, polyesters, polyvinyl chloride, and polyvinylidene fluoride. Preferred is a woven fabric made of polyethylene, polypropylene, acrylonitrile or the like for its excellent resistance to solvents, chemicals and the like. To improve the bonding property of the electrolyte composition to the shape-retaining material, the shape-retaining material may be subjected beforehand to oxidation treatment with ozone or treatment with a silane coupling agent. It is also desired to use the above-mentioned porous polyolefin film by applying similar surface treatment to improve its bonding property. The thickness of the above-described woven fabric, nonwoven fabric or woven and/or nonwoven bonded fabric can range from 1 to 1,200 µm, preferably from 2 to 400 µm. A thickness smaller than 1 µm makes it difficult to form a film, while a thickness greater than 1, 200 µm is unable to provide an impregnated film, coated film or the like in a desired thin form.

When a porous film is desired in the present invention, it can be obtained by placing the organic-solvent-containing, solid or wet film in a suitable solvent, which is a poor solvent for the material of the film but has miscibility with the organic solvent, to desolvate the film and then drying the thus-desolvated film.

Examples of the shape of the electrolyte composition according to the present invention as placed in a battery or capacitor can include a simple solid film making use of a solid electrolyte composition; a solid film formed by coating or impregnating a woven fabric, a nonwoven fabric or a woven and/or nonwoven bonded fabric; a solid film formed by coating or impregnating a porous polyolefin film; a solid film formed on an electrode material; a simple wet film making use of a wet electrolyte composition; a wet film formed by coating or impregnating a woven fabric, a nonwoven fabric or a woven and/or nonwoven bonded fabric; a wet film formed by coating or impregnating a porous polyolefin film; a wet film formed by sandwiching a porous polyolefin film with two wet layers; a wet film formed on an electrode material; and a composite film composed of two or more of the above-mentioned films. The film composed of the electrolyte composition according to the present invention or a composite film formed of the film and the shape-retaining material is also excellent in physical strength, and can function as a separator in a battery or the like. Bonding of the above-described film to the electrolyte material or impregnation or coating of the electrolyte material with the above-described film is effective in improving the contact between the electrode and the electrolyte composition.

As a yet further method for forming the electrolyte composition according to the present invention into a film, the above-described electrolyte component (C) and, if needed, the organic solvent, the oligomer component (B), a crosslinking agent and the like are mixed with the monomer containing cyclocarbonato group(s) or with a mixture of the monomer and a comonomer; and the resulting mixture is then subjected to a polymerization reaction either by itself or after impregnating a shape-retaining material such as a porous membrane or nonwoven fabric, an electrode material or the like. When a (co)polymer of an epoxy-containing monomer as a monomer or of a mixture of the monomer and a comonomer is used, the (co) polymer can be reacted further with carbon dioxide to convert epoxy group(s) into cyclocarbonato group(s). The above-described polymerization reaction can be conducted by heat polymerization, UV polymerization, EB polymerization, radiation polymerization or the like, which makes use of a conventionally-known radical polymerization catalyst or ion polymerization catalyst. Usable examples of the radical polymerization catalyst can include azobisisobutyronitrile, azobiscyanovaleric acid, benzoyl peroxide, lauroyl peroxide and cumene hydroperoxide, all of which are known to date. Usable examples of the crosslinking agent can include the above-described, conventionally-known, polyfunctional compounds each of which contain isocyanato group(s) or epoxy group(s). After the monomer-containing mixture is formed into a film and then placed in a battery or capacitor, the above-described polymerization reaction can be conducted to provide a film composed of the electrolyte composition according to the present invention.

The present invention also provides a battery or electric double layer capacitor with the electrolyte composition filled therein or with the film of the composition placed therein. The remaining construction of the battery or capacitor is similar to the corresponding constructions of batteries or electric double layer capacitors known to date. As described above, the present invention also provides (a) a process for the production of a (co)polymer containing at least one cyclocarbonato group, which comprises reacting carbon dioxide with a (co)polymer containing at least one epoxy group; (b) a process for the production of a (co)polymer containing at least one cyclocarbonato group, which comprises (co)polymerizing a monomer containing at least one cyclocarbonato group, which has been obtained by reacting carbon dioxide with a monomer containing at least one epoxy group; (c) a process for the production of an oligomer containing two or more cyclocarbonato groups in a molecule, which comprises reacting carbon dioxide with an oligomer containing two or more epoxy groups in a molecule; and (co)polymers containing at least one cyclocarbonato group and obtained by these processes (a) and (b), respectively, and an oligomer containing two or more cyclocarbonato groups in a molecule and obtained by the process (c) . As described above, these (co)polymers and oligomer are useful as ion-conducting media for batteries or electric double layer capacitors. Examples

The present invention will next be described more specifically based on the following Examples, in which all the designations of "part" or "parts" and "%" are on a weight basis unless otherwise specifically indicated.

### [Example 1] (Synthesis Example) (Synthesis of Polymers-1 containing cyclocarbonato groups)

### (1) Synthesis of Polymer (A-1)

A polymerization reaction vessel was fitted with a reflux condenser, a thermometer, a stirrer and a nitrogen gas inlet tube. Dimethylformamide (DMF) (200 g), glycidyl methacrylate (GMA) (50 g) and as a polymerization initiator, azobisisobutyronitrile (AIBN) (1.5 g) were charged and, while nitrogen gas was caused to flow through the polymerization reaction vessel, a polymerization reaction was conducted at 80°C for 6 hours to yield polyglycidyl methacrylate (PGMA). Into a reaction vessel equipped with a reflux condenser, a thermometer, a stirrer and a carbon dioxide inlet tube, a solution (100 g) of PGMA (20 g) in DMF and lithium bromide (LiBr) (1.22 g) were charged and, while carbon dioxide was blown at a flow rate of 5.0 liters per minute, a reaction was allowed to proceed at 100°C for 2 hours. The resulting, pale yellow, clear polymer solution was added dropwise into methanol to have the polymer precipitated. The polymer was collected by filtration and then dried to obtain the polymer with a pale yellow color. As a result of an analysis of that polymer by infrared absorption spectroscopy, it was confirmed that an absorption at 910 cm⁻¹ ascribable to epoxy rings in PGMA had disappeared and an absorption peak ascribable to cyclocarbonato groups had appeared at 1,800 cm⁻¹. This cyclocarbonatopropyl methacrylate (CCPMA) polymer will be referred to as "Polymer-1 containing cyclocarbonato groups". LiClO₄ was added in proportions of from 50 to 80 mol % based on the cyclocarbonato groups in Polymer-1 to afford electrolyte compositions according to the present invention. The ion conductivites of those electrolyte compositions were determined to range from about 10⁻⁴ to 10⁻⁵ S/cm.

### (2) Synthesis of Polymer (A-2) (not according to the invention)

Into a reaction vessel equipped with a reflux condenser, a thermometer, a stirrer and a carbon dioxide inlet tube, ethylene glycol dibutyl ether (EGDB) (65.5 g), GMA (50 g), hydroquinone (0.05 g) as a polymerization inhibitor and LiBr (3.05 g) as a reaction catalyst were charged and, while carbon dioxide was blown at a flow rate of 5.0 liters per minute, a reaction was allowed to proceed at 100°C for 2 hours. Subsequent to the reaction, the reaction mixture was washed with water to eliminate the reaction catalyst and polymerization inhibitor, so that a solution of CCPMA in EGDB was obtained. The thus-obtained 50% solution (52.4 g) of CCPMA in EGDB and DMF (27.6 g) were then charged into a polymerization reaction vessel equipped with a reflux condenser, a thermometer, a stirrer and a nitrogen gas inlet tube, and AIBN (1.5 g) was added. While nitrogen gas was caused to flow through the polymerization reaction vessel, a polymerization reaction was conducted at 80°C for 6 hours. Precipitation, filtration and drying were conducted to obtain a CCPMA polymer. In a similar manner as in the above-described synthesis (1), LiClO₄ was added to the thus-obtained CCPMA polymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCPMA polymer was used in a similar manner as "Polymer-1 containing cyclocarbonato groups", and similar results were obtained.

### [Example 2] (Synthesis Example) (Synthesis of Polymers-2 containing cyclocarbonato groups)

### (1) Synthesis of Copolymer (A-1)

In a similar manner as in Example 1, DMF (210 g), GMA (50 g, 0.35mol), 2-hydroxyethyl methacrylate (HEMA) (0.91g, 0.007 mol) and AIBN (1.5g) were charged into a polymerization reaction vessel, and a polymerization reaction was conducted to yield a GMA/HEMA copolymer containing hydroxyl groups. In a similar manner as in Example 1, carbon dioxide was then blown in in the presence of lithium bromide as a catalyst to conduct cyclocarbonation. Precipitation, filtration and drying were conducted to obtain a pale yellow polymer. This CCPMA-HEMA copolymer will be referred to as "Polymer-2 containing cyclocarbonato groups" . LiClO₄ was added in proportions of from 50 to 80 mol % based on the cyclocarbonato groups in Polymer-2 to afford electrolyte compositions according to the present invention. The ion conductivites of those electrolyte compositions were determined to range from about 10⁻⁴ to 10⁻⁵ S/cm.

### (2) Synthesis of Copolymer (A-2) (not according to the invention)

Following the procedure of Example 1, a solution (130.2 g) of CCPMA (65.1 g, 0.35 mol) in EGDB, said solution having been obtained in a similar manner as in Example 1, DMF (144.9 g), HEMA (0.91 g) and AIBN (1.5 g) were charged into a polymerization reaction vessel, and then, a polymerization reaction was conducted. Precipitation, filtration and drying were conducted to obtain a CCPMA-HEMA copolymer containing hydroxyl groups. In a similar manner as in the above-described synthesis (1), LiClO₄ was added to the thus-obtained CCPMA-HEMA copolymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCPMA-HEMA copolymer was used in a similar manner as "Polymer-2 containing cyclocarbonato groups", and similar results were obtained.

### [Example 3] (Synthesis Example) (Synthesis of Polymers-3 containing cyclocarbonato groups)

### (1) Synthesis of Copolymer (A-1)

In a similar manner as in Example 1, DMF (210 g), GMA (50 g, 0.35 mol), polyethylene glycol monomethacrylate (PEGMA) (51 g, 0.12mol), HEMA (3.0g, 0.02mol) and AIBN (1.5g) were charged into a polymerization reaction vessel, and a polymerization reaction was conducted. In a similar manner as in Example 1, carbon dioxide was then blown in in the presence of lithiumbromide as a catalyst to conduct cyclocarbonation. Precipitation, filtration and drying were conducted to obtain a pale yellow polymer. This CCMA-PEGMA-HEMA copolymer containing hydroxyl groups will be referred to as "Polymer-3 containing cyclocarbonato groups". LiClO₄ was added in proportions of from 50 to 80 mol % based on the cyclocarbonato groups and ether groups in Polymer-3 to afford electrolyte compositions according to the present invention. The ion conductivites of those electrolyte compositions were determined to range from about 10⁻⁴ to 10⁻⁵ S/cm.

### (2) Synthesis of Copolymer (A-2) (not according to the invention)

Following the procedure of Example 1, a solution (130.2 g) of CCPMA (65.1 g, 0.35 mol) in EGDB, said solution having been obtained in a similar manner as in Example 1, PEGMA (51 g) , HEMA (3.0g) andAIBN (1.5g) were charged into a polymerization reaction vessel, and then, a polymerization reaction was conducted. Precipitation, filtration and drying were conducted to obtain a CCMA-PEGMA-HEMA copolymer containing hydroxyl groups. In a similar manner as in the above-described synthesis (1), LiClO₄ was added to the thus-obtained CCMA-PEGMA-HEMA copolymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCMA-PEGMA-HEMA copolymer was used in a similar manner as "Polymer-3 containing cyclocarbonato groups", and similar results were obtained.

### [Example 4] (Synthesis Example) (Synthesis of Polymers-4 containing cyclocarbonato groups)

### (1) Synthesis of Copolymer (A-1)

In a similar manner as in Example 1, DMF (210 g), GMA (70 g, 0.49 mol), methoxypolyethylene glycol monomethacrylate (MPEGMA) (30 g, 0.11 mol) and AIBN (1.5 g) were charged into a polymerization reaction vessel, and a polymerization reaction was conducted. In a similar manner as in Example 1, carbon dioxide was then blown in in the presence of lithium bromide as a catalyst to conduct cyclocarbonation. Precipitation, filtration and drying were conducted to obtain a pale yellow polymer. This CCMA-PEGMA copolymer will be referred to as "Polymer-4 containing cyclocarbonato groups". LiClO₄ was added in proportions of from 50 to 80 mol % based on the cyclocarbonato groups and ether groups in Polymer-4 to afford electrolyte compositions according to the present invention. The ion conductivites of those electrolyte compositions were determined to range from about 10⁻⁴ to 10⁻⁵ S/cm.

### (2) Synthesis of Copolymer (A-2) (not according to the invention)

Following the procedure of Example 1, a solution (182.2 g) of CCPMA (91.1 g, 0.49 mol) in EGDB, said solution having been obtained in a similar manner as in Example 1, DMF (118.9 g), MPEGMA (30 g) and AIBN (1.5 g) were charged into a polymerization reaction vessel, and then, a polymerization reaction was conducted. Precipitation, filtration and drying were conducted to obtain a CCMA-MPEGMA copolymer. In a similar manner as in the above-described synthesis (1), LiClO₄ was added to the thus-obtained CCMA-MPEGMA copolymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCMA-MPEGMA copolymer was used in a similar manner as "Polymer-4 containing cyclocarbonato groups", and similar results were obtained.

### [Example 5] (Synthesis Example) (Synthesis of Polymers-5 containing cyclocarbonato groups)

### (1) Synthesis of Copolymer (A-1)

In a similar manner as in Example 1, DMF (240 g), GMA (18 g, 0.13 mol), butyl acrylate (BA) (42 g, 0.33 mol), HEMA (1.4 g, 0.01 mol) and AIBN (1.0 g) were charged into a polymerization reaction vessel, and a polymerization reaction was conducted. In a similar manner as in Example 1, carbon dioxide was then blown in in the presence of lithium bromide as a catalyst to conduct cyclocarbonation. Precipitation, filtration and drying were conducted to obtain a pale yellow polymer. This CCMA-BA-HEMA copolymer containing hydroxyl groups will be referred to as "Polymer-5 containing cyclocarbonato groups". LiClO₄ was added in proportions of from 50 to 80 mol % based on the cyclocarbonato groups in Polymer-5 to afford electrolyte compositions according to the present invention. The ion conductivites of those electrolyte compositions were determined to range from about 10⁻⁵ to 10⁻⁶ S/cm.

### (2) Synthesis of Copolymer (A-2) (not according to the invention)

Following the procedure of Example 1, a solution (48.4 g) of CCPMA (24.2 g, 0.13 mol) in EGDB, said solution having been obtained in a similar manner as in Example 1, DMF (191.6 g), BA (42 g), HEMA (1.4 g) and AIBN (1.0 g) were charged into a polymerization reaction vessel, and then, a polymerization reaction was conducted. Precipitation, filtration and drying were conducted to obtain a CCMA-BA-HEMA copolymer containing hydroxyl groups. In a similar manner as in the above-described synthesis (1), LiClO₄ was added to the thus-obtained CCMA-BA-HEMA copolymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCMA-BA-HEMA copolymer was used in a similar manner as "Polymer-5 containing cyclocarbonato groups", and similar results were obtained.

### [Example 6] (Synthesis Example) (Synthesis of Polymers-6 containing cyclocarbonato groups)

### (1) Synthesis of Copolymer (A-1)

In a similar manner as in Example 1, DMF (240 g), GMA (30 g, 0.21 mol), 2-ethylhexyl acrylate (EHA) (30 g, 0.17 mol) and AIBN (1.0 g) were charged into a polymerization reaction vessel, and a polymerization reaction was conducted. In a similar manner as in Example 1, carbon dioxide was then blown in in the presence of lithium bromide as a catalyst to conduct cyclocarbonation. Precipitation, filtration and drying were conducted to obtain a pale yellow polymer. This CCMA-EHA copolymer will be referred to as "Polymer-6 containing cyclocarbonato groups". LiClO₄ was added in proportions of from 50 to 80 mol % based on the cyclocarbonato groups in Polymer-6 to afford electrolyte compositions according to the present invention. The ion conductivites of those electrolyte compositions were determined to range from about 10⁻⁵ to 10⁻⁶ S/cm.

### (2) Synthesis of Copolymer (A-2) (not according to the invention)

Following the procedure of Example 1, a solution (78.2 g) of CCPMA (39.1 g, 0.21 mol) in EGDB, said solution having been obtained in a similar manner as in Example 1, DMF (200.9 g), EHA (30 g) and AIBN (1.0 g) were charged into a polymerization reaction vessel, and then, a polymerization reaction was conducted. Precipitation, filtration and drying were conducted to obtain a CCMA-EHA copolymer. In a similar manner as in the above-described synthesis (1), LiClO₄ was added to the thus-obtained CCMA-EHA copolymer to afford electrolyte compositions according to the present invention. Those electrolyte compositions showed ion conductivities of from about 10⁻⁴ to 10⁻⁵ S/cm. In certain Examples to be described subsequently herein, the thus-obtained CCMA-EHA copolymer was used in a similar manner as "Polymer-6 containing cyclocarbonato groups", and similar results were obtained.

### [Example 7] (Synthesis Example) (Synthesis of Oligomer-1 containing cyclocarbonato groups)

Following the procedure of Example 1, DMF (150 g), pentaerythritol-poly(glycidyl ether) (epoxy equivalent: 229) (150 g) and lithium bromide (5.69 g) were charged into a reaction vessel, and in a similar manner as in Example 1, carbon dioxide was blown in to conduct cyclocarbonation. An end point of the reaction was confirmed by infrared absorption spectroscopy. DMF was distilled off under reduced pressure to obtain a pale yellow liquid substance. This pentaerythritol-poly(cyclocarbonatopropyl ether) will be referred to as "Oligomer-1 containing cyclocarbonato groups". LiClO₄ was added in proportions of from 50 to 80 mol % based on the cyclocarbonato groups in Oligomer-1 to afford electrolyte compositions according to the present invention. The ion conductivites of those electrolyte compositions were determined to range from about 10⁻² to 10⁻³ S/cm.

### [Example 8] (Synthesis Example) (Synthesis of Oligomer-2 containing cyclocarbonato groups)

Following the procedure of Example 1, DMF (150 g), polyglycerin poly(glycidyl ether) (epoxy equivalent: 183) (150 g) and lithium bromide (7.12 g) were charged into a reaction vessel, and in a similar manner as in Example 1, carbon dioxide was blown in to conduct cyclocarbonation. DMF was distilled off under reduced pressure to obtain a pale yellow liquid substance. This polyglycerin-poly(cyclocarbonatopropyl ether) will be referred to as "Oligomer-2 containing cyclocarbonato groups". LiClO₄ was added in proportions of from 50 to 80 mol % based on the cyclocarbonato groups in Oligomer-2 to afford electrolyte compositions according to the present invention. The ion conductivites of those electrolyte compositions were determined to range from about 10⁻² to 10⁻³ S/cm.

### [Example 9] (Synthesis Example) (Synthesis of Oligomer-3 containing cyclocarbonato groups)

Following the procedure of Example 1, DMF (150 g), polyethylene glycol diglycidyl ether (epoxy equivalent: 185) (150 g) and lithium bromide (5.69 g) were charged into a reaction vessel, and in a similar manner as in Example 1, carbon dioxide was blown in to conduct cyclocarbonation. DMF was distilled off under reduced pressure to obtain a pale yellow liquid substance. This polyethylene glycol-di(cyclocarbonatopropyl ether) will be referred to as "Oligomer-3 containing cyclocarbonato groups". LiClO₄ was added in proportions of from 50 to 80 mol % based on the cyclocarbonato groups in Oligomer-3 to afford electrolyte compositions according to the present invention. The ion conductivites of those electrolyte compositions were determined to range from about 10⁻² to 10⁻³ S/cm.

### [Example 10] (Synthesis Example) (Synthesis of Oligomer-4 containing cyclocarbonato groups)

Following the procedure of Example 1, DMF (150 g), trimethylolpropane polyglycidyl ether (epoxy equivalent: 140) (150 g) and lithium bromide (5.69 g) were charged into a reaction vessel, and in a similar manner as in Example 1, carbon dioxide was blown in to conduct cyclocarbonation. An end point of the reaction was confirmed by infrared absorption spectroscopy. DMF was distilled off under reduced pressure to obtain a pale yellow liquid substance. This trimethylolpropane-poly(cyclocarbonatopropyl ether) will be referred to as "Oligomer-4 containing cyclocarbonato groups". LiClO₄ was added in proportions of from 50 to 80 mol % based on the cyclocarbonato groups in Oligomer-4 to afford electrolyte compositions according to the present invention. The ion conductivites of those electrolyte compositions were determined to range from about 10⁻² to 10⁻³ S/cm.

### [Example 11] (Synthesis Example) (Synthesis of Oligomer-5 containing cyclocarbonato groups)

Following the procedure of Example 1, DMF (150 g), neopentyl glycol diglycidyl ether (epoxy equivalent: 138) (150 g) and lithium bromide (7.12 g) were charged into a reaction vessel, and in a similar manner as in Example 1, carbon dioxide was blown in to conduct cyclocarbonation. DMF was distilled off under reduced pressure to obtain a pale yellow liquid substance. This neopentyl glycol-poly(cyclocarbonatopropyl ether) will be referred to as "Oligomer-5 containing cyclocarbonato groups". LiClO₄ was added in proportions of from 50 to 80 mol % based on the cyclocarbonato groups in Oligomer-5 to afford electrolyte compositions according to the present invention. The ion conductivites of those electrolyte compositions were determined to range from about 10⁻² to 10⁻³ S/cm.

### [Example 12] (Synthesis Example) (Synthesis of Oligomer-6 containing cyclocarbonato groups)

Following the procedure of Example 1, DMF (150 g), diglycidyl terephthalate (epoxy equivalent: 147)(150 g) and lithium bromide (5.69 g) were charged into a reaction vessel, and in a similar manner as in Example 1, carbon dioxide was blown in to conduct cyclocarbonation. DMF was distilled off under reduced pressure to obtain a pale yellow solid substance. This di(cyclocarbonatopropyl) terephthalate will be referred to as "Oligomer-6 containing cyclocarbonato groups". LiClO₄ was added in proportions of from 50 to 80 mol % based on the cyclocarbonato groups in Oligomer-6 to afford electrolyte compositions according to the present invention. The ion conductivites of those electrolyte compositions were determined to range from about 10⁻² to 10⁻³ S/cm.

### [Example 13] (Synthesis Example) (Synthesis of Solvent-1 containing cyclocarbonato groups)

Following the procedure of Example 1, DMF (150 g), 2-ethylhexyl diglycidyl ether (epoxy equivalent: 187) (150 g) and lithium bromide (5.69 g) were charged into a reaction vessel, and in a similar manner as in Example 1, carbon dioxide was blown in to conduct cyclocarbonation. DMF was distilled off under reduced pressure to obtain a pale yellow liquid substance. This 2-ethylhexyl-cyclocarbonatopropyl ether will be referred to as "Solvent-1 containing cyclocarbonato groups". LiClO₄ was added in proportions of from 50 to 80 mol % based on the cyclocarbonato groups in Solvent-1 to afford electrolyte compositions according to the present invention. The ion conductivites of those electrolyte compositions were determined to range from about 10⁻² to 10⁻³ S/cm.

### [Examples 14-21] (Formulation of Solutions of Electrolyte Compositions for the Preparation of Solid Films)

As shown in Table 1, the polymers obtained in Examples 1-6 and containing cyclocarbonato groups, the solid oligomer obtained in Example 12 and containing cyclocarbonato groups, the crosslinking agent and the inorganic electrolyte were mixed, respectively, to formulate solutions of the electrolyte compositions for the preparation of solid films. The thus-obtained solutions will hereinafter be referred to as "Solution-1" to "Solution-8". Incidentally, the mixed amounts in Tables 1-4 are expressed in terms of "parts".

**Table 1**

| | | Example | | | | | | | |
|---|---|---|---|---|---|---|---|---|---|
| | | 14 | 15 | 16 | 17 | 18 | 19 | 20 | 21 |
| Materials employed to formulate solution of electrolyte composition | | Solution | | | | | | | |
| | | -1 | -2 | -3 | -4 | -5 | -6 | -7 | -8 |
| Polymer containing cyclocarbonato groups | -1 | 20.0 | - | 5.0 | - | - | - | - | - |
| | -2 | - | 19.1 | - | - | - | - | - | - |
| | -3 | - | - | 13.2 | - | - | - | 15.0 | - |
| | -4 | - | - | - | 20.0 | - | - | - | 15.0 |
| | -5 | - | - | - | - | 15.0 | - | - | - |
| | -6 | - | - | - | - | - | 20.0 | - | - |
| Oligomer containing cyclocarbonato groups | -6 | - | - | - | - | - | - | 4.1 | 5.0 |
| TMP3HDI | | - | 1.2 | 2.4 | - | 6.0 | - | 1.2 | - |
| Solution of LiClO₄ in ethyl acetate (mL) | | 50 | 50 | 50 | 50 | 50 | 50 | 50 | 50 |

In Table 1 and Tables 2-4 to be described subsequently herein, the material-designating sign "TMP3HDI" indicates a 75% solution of a 1:3 (by molar ratio) reaction product between trimethylolpropane and hexamethylene diisocyanate, a crosslinking agent, in ethyl acetate, and "Solution of LiClO₄ in ethyl acetate" indicates a solution with LiClO₄ dissolved at a concentration of 1 mol/L in ethyl acetate.

### [Examples 22-45] (Formulation of Solutions of Electrolyte Compositions for the Preparation of Wet Films)

As shown in Table 2, the corresponding individual components were similarly mixed to formulate solutions of electrolyte compositions for use in the preparation of wet films . The thus-obtained solutions will hereinafter be referred to as "Solution-9" to "Solution-16".

**Table 2**

| | | Example | | | | | | | |
|---|---|---|---|---|---|---|---|---|---|
| | | 22 | 23 | 24 | 25 | 26 | 27 | 28 | 29 |
| Materials employed to formulate solution of electrolyte composition | | Solution | | | | | | | |
| | | -9 | -10 | -11 | -12 | -13 | -14 | -15 | -16 |
| Polymer containing cyclocarbonato groups | -1 | 5.0 | - | - | - | - | - | - | - |
| | -2 | - | 5.0 | - | - | - | - | - | - |
| | -3 | - | - | 15.0 | - | - | - | 5.0 | - |
| | -4 | - | - | - | 15.0 | - | - | - | 5.0 |
| | -5 | - | - | - | - | 10.0 | - | - | - |
| | -6 | - | - | - | - | - | 10.0 | - | - |
| Oligomer containing cyclocarbonato groups | -1 | 15.0 | - | - | - | - | - | - | - |
| | -2 | - | 14.1 | - | - | - | - | - | - |
| | -3 | - | - | 3.2 | - | - | - | - | - |
| | -4 | - | - | - | 5.0 | - | - | - | - |
| | -5 | - | - | - | - | 5.5 | - | - | - |
| | -6 | - | - | - | - | - | - | 4.1 | 5.0 |
| Solution containing cyclocarbonato groups | -1 | - | - | - | - | - | 10.0 | 10.0 | 10.0 |
| TMP3HDI | | - | 1.2 | 2.4 | - | 6.0 | - | 1.2 | - |
| Solution of LiClO₄ in ethyl acetate (mL) | | 50 | 50 | 50 | 50 | 50 | 50 | 50 | 50 |

As shown in Table 3, the corresponding individual components were similarly mixed to formulate solutions of electrolyte compositions for use in the preparation of wet films. The thus-obtained solutions will hereinafter be referred to as "Solution-17" to "Solution-24".

**Table 3**

| | | Example | | | | | | | |
|---|---|---|---|---|---|---|---|---|---|
| | | 30 | 31 | 32 | 33 | 34 | 35 | 36 | 37 |
| Materials employed to formulate solution of electrolyte composition | | Solution | | | | | | | |
| | | -17 | -18 | -19 | -20 | -21 | -22 | -23 | -24 |
| Polymer containing cyclocarbonato groups | -1 | 20.0 | - | - | - | - | - | - | - |
| | -2 | - | 19.1 | - | - | - | - | - | - |
| | -3 | - | - | 18.2 | - | - | - | - | - |
| | -4 | - | - | - | 20.0 | - | 5.0 | - | - |
| | -5 | - | - | - | - | 10.5 | 5.0 | 10.0 | - |
| | -6 | - | - | - | - | - | - | 5.0 | 10.0 |
| Oligomer containing cyclocarbonato groups | -1 | - | - | - | - | 5.0 | 10.0 | 4.1 | 10.0 |
| TMP3HDI | | - | 1.2 | 2.4 | - | 6.0 | - | 1.2 | - |
| Solution of LiClO₄ in ethyl acetate (mL) | | 50 | 50 | 50 | 50 | 50 | 50 | 50 | 50 |

As shown in Table 4, the corresponding individual components were similarly mixed to formulate solutions of electrolyte compositions for use in the preparation of wet films. The thus-obtained solutions will hereinafter be referred to as "Solution-25" to "Solution-32".

**Table 4**

| | | Example | | | | | | | |
|---|---|---|---|---|---|---|---|---|---|
| | | 38 | 39 | 40 | 41 | 42 | 43 | 44 | 45 |
| Materials employed to formulate solution of electrolyte composition | | Solution | | | | | | | |
| | | -25 | -26 | -27 | -28 | -29 | -30 | -31 | -32 |
| Polymer containing cyclocarbonato groups | -1 | 20.0 | 5.0 | - | - | - | - | - | - |
| | -2 | - | - | 5.0 | - | - | - | - | - |
| | -3 | - | - | - | 15.0 | - | - | - | - |
| | -4 | - | - | - | - | 15.0 | - | - | - |
| | -5 | - | - | - | - | - | 10.0 | - | - |
| | -6 | - | - | - | - | - | - | 10.0 | - |
| Oligomer containing cyclocarbonato groups | -1 | - | 15.0 | - | - | - | - | - | - |
| | -2 | - | - | 14.1 | - | - | - | - | - |
| | -3 | - | - | - | 3.2 | - | - | - | - |
| | 4 | - | - | - | - | 5.0 | - | - | - |
| | -5 | - | - | - | - | - | 5.5 | - | 10.0 |
| | -6 | - | - | - | - | - | - | - | 5.0 |
| Solvent containing cyclocarbonato groups | -1 | - | - | - | - | - | - | 10.0 | 4.1 |
| TMP3HDI | | - | - | 1.2 | 2.4 | - | 6.0 | - | 1.2 |
| Solution of LiClO₄ in EC/PC/EA (mL) | | 50 | 50 | 50 | 50 | 50 | 50 | 50 | 50 |
| EA (mL) | | 50 | 50 | 50 | 50 | 50 | 50 | 50 | 50 |

In Table 4, "Solution of LiClO₄ in EC/PC/EA" is a solution with LiClO₄ dissolved at a concentration of 2 mol/L in a 10:10:80 by weight mixed solvent of ethylene carbonate, propylene carbonate and ethyl acetate, and "EA" indicates ethyl acetate.

### [Example 46] (Preparation of Solid Films 1-8)

Using as coating formulations "Solution-1" to "Solution-8" obtained in Examples 14-21, they were separately coated to a dry film thickness of about 60 µm by a knife coater on sheets of release paper coated with polypropylene resin. The thus-coated solutions were dried in hot air and then peeled off to prepare 8 kinds of solid films. These solid films will hereinafter be referred to as "Solid Film-1" to "Solid Film-8".

### [Example 47] (Preparation of Wet Films 1-24)

Using "Solution-9" to "Solution-32", which had been obtained in Examples 22-45, as coating formulations as in Example 46, they were separately coated to a dry film thickness of about 60 µm by a knife coater on sheets of release paper coated with polypropylene resin. The thus-coated solutions were dried in hot air and then peeled off to prepare 24 kinds of wet films. These wet films will hereinafter be referred to as "Wet Film-1" to "Wet Film-24".

### [Example 48] (Preparation of Solid Films 9-16 as Impregnated Films)

Porous polypropylene films were immersed in "Solution-1" to "Solution-8" obtained in Examples 14-21, respectively. The thus-impregnated porous polypropylene films were wrung through a mangle, and then dried in hot air to prepare solid films. These solid films will hereinafter be referred to as "Solid Film-9" to "Solid Film-16".

### [Example 49] (Preparation of Wet Films 25-48 as Impregnated Films)

In a similar manner as in Example 48, porous polypropylene films were immersed in "Solution-9" to "Solution-32" obtained in Examples 22-45, respectively. The thus-impregnated porous polypropylene films were wrung through a mangle, and then dried in hot air to prepare wet films. These wet films will hereinafter be referred to as "Wet Film-25" to "Wet Film-48".

### [Example 50] (Preparation of Solid Films 17-24 on Nonwoven Fabrics as Shape-retaining Materials)

Nonwoven polypropylene fabrics (thickness: 80 µm, basis weight: 45 g/m²) were immersed in "Solution-1" to "Solution-8" obtained in Examples 14-21, respectively. The thus-impregnated nonwoven fabrics were wrung through a mangle, and then dried in hot air to prepare solid films. These solid films will hereinafter be referred to as "Solid Film-17" to "Solid Film-24".

### [Example 51] (Preparation of Wet Films 49-72 on Nonwoven Fabrics as Shape-retaining Materials)

In a similar manner as in Example 50, nonwoven polypropylene fabrics (thickness: 80 µm, basis weight: 45 g/m²) were immersed in "Solution-9" to "Solution-32" obtained in Examples 22-45, respectively. The thus-impregnated nonwoven fabrics were wrung through a mangle, and then dried in hot air to prepare wet films. These solid films will hereinafter be referred to as "Wet Film-49" to "Wet Film-72".

### [Example 52] (Preparation of Positive Electrodes 1-8 Composed of Impregnated Solid Electrolyte Compositions)

By conventional procedure, a mixture of a positive electrode active material (lithium cobaltate), a conductive material (acetylene black) and a binder (polyvinylidene fluoride) was coated on an aluminum foil as a positive electrode current collector. The thus-coated aluminum foil was dried, and then pressed to provide positive electrode active material sheets each of which carried the mixture in a dry form at a thickness of 0.1 mm. The positive electrode active material sheets were then immersed in "Solution-1" to "Solution-8" obtained in Examples 14-21, respectively. The thus-impregnated positive electrode active material sheets were dried in hot air to prepare positive electrodes composed of impregnated solid electrolyte compositions. These impregnated solid electrolyte compositions will hereinafter be referred to as "Impregnated Solid Positive Electrode-1" to "Impregnated Solid Positive Electrode-8".

### [Example 53] (Preparation of Positive Electrodes 1-8 Composed of Impregnated Wet Electrolyte Compositions)

In a similar manner as in Example 52, positive electrode active material sheets similar to those obtained in Example 52 were immersed in "Solution-9" to "Solution-32" obtained in Examples 22-45, respectively. The thus-impregnated positive electrode active material sheets were dried in hot air to prepare positive electrodes composed of impregnated wet electrolyte compositions. These impregnated wet electrolyte compositions will hereinafter be referred to as "Impregnated Wet Positive Electrode-1" to "Impregnated Wet Positive Electrode-8".

### [Example 54] (Preparation of Positive Electrodes Composed of Impregnated Wet Electrolyte Composition)

Wet films were obtained by immersing the solid films, which had been obtained above in Examples 46, 48 and 50, respectively, in a 50:50 by weight mixed solvent of ethylene carbonate and propylene carbonate.

### [Example 55] (Preparation of Positive Electrodes Composed of Impregnated Wet Electrolyte Compositions)

Positive electrodes composed of impregnated wet electrolyte compositions were obtained by immersing the positive electrodes, which had been obtained in Example 52 and were composed of the impregnated solid electrolyte compositions, in a 50:50 by weight mixed solvent of ethylene carbonate and propylene carbonate.

### [Example 56] (Fabrication of Lithium Ion Secondary Batteries)

Between a positive electrode and a negative electrode both of which had been obtained by conventional procedure, Solid Film-1 obtained in Example 46 was sandwiched to form an electrolyte cell layer. The electrolyte cell layer was folded in a zigzag form to obtain a stacked cell unit. In this case, a porous polypropylene film may be additionally sandwiched. The stacked cell unit obtained as described above was covered with aluminum laminated films. By fusion bonding, the stacked cell unit was sealed along four sides thereof to fabricate a lithium ion secondary battery. The lithium ion secondary battery had achieved reductions in weight and thickness and improvements in safety, was equipped with improved ion conductivity, and exhibited superb performance as a secondary battery. From Solid Film-2 to Solid Film-24 obtained in Examples 46, 48 and 50, Wet Film-1 to Wet Film-72 obtained in Examples 47, 49 and 51, and the wet films obtained in Example 54, lithium ion secondary batteries were fabricated likewise. Those lithium ion secondary batteries had also achieved reductions in weight and thickness and improvements in safety, were also equipped with improved ion conductivity, and also exhibited superb performance as secondary batteries.

### [Example 57] (Fabrication of Lithium Ion Secondary Batteries)

Lithium ion secondary batteries were fabricated in a similar manner as in Example 57 except for the use of Positive Electrode-1 to Positive Electrode-8 which had been obtained in Example 52 and were composed of the impregnated solid electrolyte compositions, Positive Electrode-1 to Positive Electrode-8 which had been obtained in Example 53 and were composed of the impregnated wet electrolyte compositions, and the positive electrodes which had been obtained in Example 55 and were composed of the impregnated wet electrolyte compositions. Those lithium ion secondary batteries had also achieved reductions in weight and thickness and improvements in safety, were also equipped with improved ion conductivity, and also exhibited superb performance as secondary batteries.

### [Example 58] (Fabrication of Electric Double Layer Capacitors)

Following conventional procedure for the fabrication of electric double layer capacitors, Solid Film-1 obtained above in Example 46 was used as a conductive layer, and further, a porous polypropylene film was sandwiched to form a multi-layered structure. The multi-layered structure was rolled to form a multi-layered electrolyte unit. The thus-formed multi-layered electrolyte unit was covered with aluminum laminated films. By fusion bonding, the multi-layered electrolyte unit was sealed along four sides thereof to fabricate an electric double layer capacitor. The electric double layer capacitor had achieved reductions in weight and thickness and improvements in safety, was equipped with improved ion conductivity, and exhibited superb performance as an electric double layer capacitor. Using the other solid films and wet films obtained in Examples 46-51 and 54, electric double layer capacitors were also fabricated likewise. In addition, using the positive electrode active material sheets impregnated with the electrolyte compositions of Examples 1 to 13, electric double layer capacitors were also fabricated likewise. Those electric double layer capacitors had also achieved reductions in weight and thickness and improvements in safety, were also equipped with improved ion conductivity, and also exhibited superb performance as electric double layer capacitors.

This application claims the priority of Japanese Patent Application 2002-221903 filed July 30, 2002.

## Claims

1. A process for the production of an electrolyte composition for batteries or electric double layer capacitors, said electrolyte composition comprising
(A) a polymer component containing at least one cyclocarbonato group represented by the below-described formula (1) 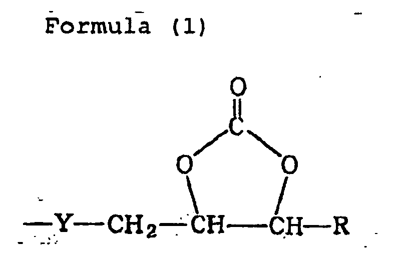 wherein
Y represents a connecting group to a backbone of a corresponding (co)polymer in a step (A-1), and
R represents a hydrogen atom or an alkyl group having 1 to 3 carbon atoms; and
(C) an electrolyte component,
said process comprises, for the preparation of polymer component (A), the following step:
(A-1) reacting carbon dioxide with a (co)polymer which contains at least one recurring unit represented by the below-described formula (2) 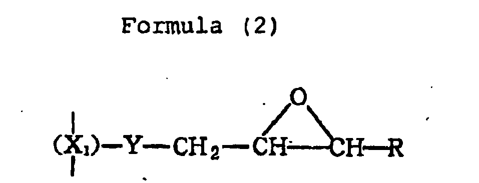 wherein
X₁ represents a polymerization residual group of an α,β -unsaturated carboxylic acid,
Y represents the connecting group, and
R represents a hydrogen atom or an alkyl group having 1 to 3 carbon atoms.

2. The process according to claim 1 wherein said α,β-unsaturated carboxylic acid comprises at least one α,β-unsaturated carboxylic acid selected from the group consisting of acrylic acid, methacrylic acid, crotonic acid, maleic acid, fumaric acid and itaconic acid.

3. The process according to claim 1, wherein said (co)polymer is a homopolymer of glycidyl methacrylate or a copolymer of glycidyl methacrylate and another one or more monomer(s).

4. The process according to claim 3, wherein said another monomer is selected from the group consisting of 2-hydroxyethyl methacrylate, polyethylene glycol monomethacrylate, methoxypolyethylene glycol monomethacrylate, butyl acrylate and 2-ethylhexyl acrylate.

5. The process according to claim 1, wherein said polymer component (A) is a noncrosslinked (co)polymer and/or a crosslinked (co)polymer.

6. The process according to claim 1, wherein said electrolyte component (C) is at least one compound selected from the group consisting of compounds which form lithium ions, sodium ions, potassium ions, ammonium ions or tetraalkylammonium ions.

7. The process according to claim 6, wherein said electrolyte component (C) is at least one compound selected from the group consisting of lithium bromide, lithium iodide, lithium thiocyanate, lithium perchlorate, lithium tetrafluoroborate, lithium hexafluorophosphate, lithium trifluoromethanesulfonate, lithium bis(trifluoromethanesulfonyl)amide, tetraethylammonium perchlorate, tetraethylammonium tetrafluoroborate, and tetraethylammonium hexafluorophosphate.

8. An electrolyte composition for batteries or electric double layer capacitors, said electrolyte composition comprising
(A) a polymer component and
(C) an electrolyte component,
which is obtainable according to process of of any one of claim 1 to 7.

9. An electrolyte film for a battery or electric double layer capacitor, wherein said electrolyte film comprises the electrolyte composition according to claim 8.

10. The electrolyte film according to claim 9 for a battery or electric double layer capacitor, wherein said electrolyte film is retained in shape by at least one shape-retaining material selected from a woven fabric, a nonwoven fabric, a woven and/or nonwoven, bonded fabric, or a porous polyolefin film.

11. A battery or electric double layer capacitor, **characterized in that** the electrolyte composition according to claim 8 is filled.

12. A battery or electric double layer capacitor, **characterized in that** the electrolyte film according to any one of claims 9 or 10 is placed.

## Patentansprüche

1. Verfahren zur Herstellung einer Elektrolytzusammensetzung für Batterien oder elektrischen Doppelschichtkondensatoren, wobei die Elektrolytzusammensetzung umfasst
(A) eine Polymerkomponente, enthaltend mindestens eine Cyclocarbonatgruppe der unten beschriebenen Formel (1) 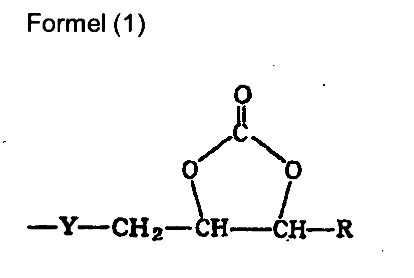 wobei
Y für eine Anbindungsgruppe an das Gerüst eines entsprechenden (Co)polymers aus einer Stufe (A-1) steht, und
R für ein Wasserstoffatom oder einer Alkylgruppe mit 1 bis 3 Kohlenstoffatomen steht; sowie
(C) eine Elektrolytkomponente,
wobei das Verfahren zur Herstellung einer Polymerkomponente (A) die folgenden Stufen umfasst:
(A-1) Umsetzung von Kohlendioxid mit einem (Co)polymer das mindestens eine Wiederholungseinheit der unten beschriebenen Formel (2) umfasst 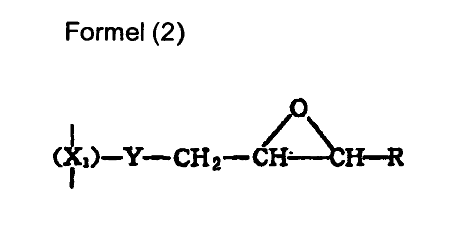 wobei
X₁ für eine aus einer Polymerisation zurückbleibenden Gruppe einer α, β-ungestättigten Carbonsäure steht,
Y für eine Verbindungsgruppe, und
R für ein Wasserstoffatom oder eine Alkylgruppe mit 1 bis 3 Kohlenstoffatomen steht.

2. Verfahren nach Anspruch 1, wobei die α, β-ungestättigte Carbonsäure mindestens eine α, β-ungestättigte Carbonsäure umfasst, die ausgewählt ist aus der Gruppe, bestehend aus Acrylsäure, Methacrylsäure, Crotonsäure, Maleinsäure, Fumarsäure und Itakonsäure.

3. Das Verfahren nach Anspruch 1, wobei das (Co)polymer ein Homopolymer ist aus Glycidylmethacrylat oder Copolymer aus Glycidylmethacrylat und einem oder mehreren weiteren Monomeren.

4. Das Verfahren nach Anspruch 3, wobei das weitere Monomer ausgewählt wird aus der Gruppe, bestehend aus 2-Hydroxyethylmethacrylat, Polyethylenglycolmonomethacrylat, Methoxypolyethylenglycolmonomethacrylat, Butylacrylat und 2-Ethylhexylacrylat.

5. Das Verfahren nach Anspruch 1, wobei die Polymerkomponente (A) ein unvernetztes (Co)polymer und/oder ein vernetztes (Co)polymer ist.

6. Das Verfahren nach Anspruch 1, wobei die Elektrolytkomponente (C) mindestens eine Verbindung ist, die ausgewählt wird, aus der Gruppe, bestehend aus Verbindungen die Lithiumionen, Natriumionen, Kaliumionen, Ammoniumionen oder Tetraalkylammoniumionen abgeben.

7. Das Verfahren nach Anspruch 6, wobei die Elektrolytkomponente (C) mindestens eine Verbindung ist, die ausgewählt wird aus der Gruppe, bestehend aus Lithiumbromid, Lithiumjodid, Lithiumthiocyanat, Lithiumperchlorat, Lithiumtetrafluorborat, Lithiumhexafluorphosphat, Lithiumtrifluormethansulfonat, Lithiumbis(trifluormethansulfonyl)amid, Tetraethylammoniumperchlorat, Tetraethylammoniumtetrafluorborat, und Tetraethylammoniumhexafluorphosphat.

8. Elektrolytzusammensetzung für Batterien oder elektrische Doppelschichtkondentsatoren, wobei die Elektrolytzusammensetzung umfasst
(A) eine Polymerkomponente und
(C) eine Elektrolytkomponente, die nach dem Verfahren aus einem der Ansprüche 1 bis 7 erhältlich ist.

9. Elektrolytschicht für eine Batterie oder einen elektrischen Doppelschichtkondensator, wobei die Elektrolytschicht die Elektrolytzusammensetzung nach Anspruch 8 umfasst.

10. Die Elektrolytschicht nach Anspruch 9 für eine Batterie oder einen elektrischen Doppelschichtkondensator, wobei die Elektrolytschicht von mindestens einem formwahrenden Material in einer Form gehalten wird, das ausgewählt wird aus einem Gewebe, einem Vlies, einer gewebten oder nicht-gewebten Ware oder einem porösen Polyolefinfilm.

11. Batterie oder elektrischer Doppelschichtkondensator, **gekennzeichnet durch** eine Befüllung mit der Elektrolytzusammensetzung nach Anspruch 8.

12. Batterie oder elektrischer Doppelschichtkondensator, **gekennzeichnet durch** einen Einsatz des Films nach einem der Ansprüche 9 oder 10.

## Revendications

1. Procédé pour la production d'une composition d'électrolyte pour batteries ou condensateurs électriques double couche, ladite composition d'électrolyte comprenant
(A) un composant polymère contenant au moins un groupe cyclocarbonato représenté par la formule (1) décrite ci-dessous 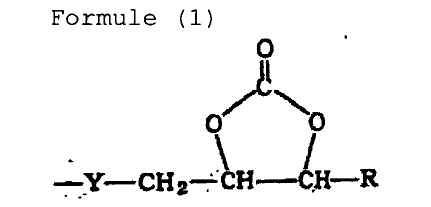 dans laquelle
Y représente un groupe de liaison à un squelette d'un (co)polymère correspondant dans une étape (A-1), et
R représente un atome d'hydrogène ou un groupe alkyle ayant de 1 à 3 atomes de carbone ; et
(C) un composant électrolyte,
ledit procédé comprenant, pour la préparation du composant polymère (A), l'étape suivante :
(A-1) réaction de dioxyde de carbone avec un (co)polymère qui contient au moins un motif récurrent représenté par la formule (2) décrite ci-dessous 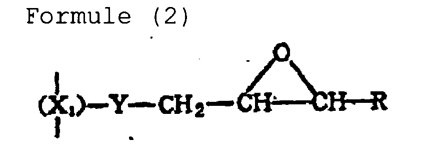 dans laquelle
X₁ représente un groupe résiduel de polymérisation d'un acide carboxylique α,β-insaturé,
Y représente le groupe de liaison, et
R représente un atome d'hydrogène ou un groupe alkyle ayant de 1 à 3 atomes de carbone.

2. Procédé selon la revendication 1, dans lequel ledit acide carboxylique α,β-insaturé comprend au moins un acide carboxylique α,β-insaturé choisi dans l'ensemble constitué par l'acide acrylique, l'acide méthacrylique, l'acide crotonique, l'acide maléique, l'acide fumarique et l'acide itaconique.

3. Procédé selon la revendication 1, dans lequel ledit (co)polymère est un homopolymère de méthacrylate de glycidyle ou un copolymère de méthacrylate de glycidyle et d'un ou plusieurs autres monomères.

4. Procédé selon la revendication 3, dans lequel ledit autre monomère est choisi dans l'ensemble constitué par le méthacrylate de 2-hydroxyéthyle, le monométhacrylate de polyéthylèneglycol, le monométhacrylate de méthoxypolyéthylèneglycol, l'acrylate de butyle et l'acrylate de 2-éthylhexyle.

5. Procédé selon la revendication 1, dans lequel ledit composant polymère (A) est un (co)polymère non réticulé et/ou un (co)polymère réticulé.

6. Procédé selon la revendication 1, dans lequel ledit composant électrolyte (C) est au moins un composé choisi dans l'ensemble constitué par les composés qui forment des ions lithium, des ions sodium, des ions potassium, des ions ammonium ou des ions tétraalkylammonium.

7. Procédé selon la revendication 6, dans lequel ledit composant électrolyte (C) est au moins un composé choisi dans l'ensemble constitué par le bromure de lithium, l'iodure de lithium, le thiocyanate de lithium, le perchlorate de lithium, le tétrafluoroborate de lithium, l'hexafluorophosphate de lithium, le
trifluorométhanesulfonate de lithium, le bis(trifluorométhanesulfonyl)amide de lithium, le perchlorate de tétraéthylammonium, le tétrafluoroborate de tétraéthyl-ammonium et l'hexafluorophosphate de tétraéthylammonium.

8. Composition d'électrolyte pour batteries ou condensateurs électriques double couche, ladite composition d'électrolyte comprenant
(A) un composant polymère et
(C) un composant électrolyte,
et pouvant être obtenue selon le procédé de l'une quelconque des revendications 1 à 7.

9. Film d'électrolyte pour une batterie ou un condensateur électrique double couche, lequel film d'électrolyte comprend la composition d'électrolyte selon la revendication 8.

10. Film d'électrolyte selon la revendication 9 pour une batterie ou un condensateur électrique double couche, la forme dudit film d'électrolyte étant maintenue au moyen d'au moins un matériau de maintien de forme choisi parmi une étoffe tissée, une étoffe non tissée, une étoffe liée tissée et/ou non tissée, et un film de polyoléfine poreux.

11. Batterie ou condensateur électrique double couche, **caractérisé en ce qu'**elle (il) est garni(e) de la composition d'électrolyte selon la revendication 8.

12. Batterie ou condensateur électrique double couche, **caractérisé en ce qu'**il comprend le film d'électrolyte selon l'une quelconque des revendications 9 et 10.
